# EUROPEAN PATENT SPECIFICATION

(11) **EP 3 075 564 B1**
(45) Date of publication and mention of the grant of the patent: **14.10.2020**
(21) Application number: 16162577.7
(22) Date of filing: 29.03.2016
(51) Int. Cl.: B44C 1/24, B44C 3/00, B60R 13/10

(54) **LICENSE PLATE AND MANUFACTURING PROCESS**
KENNZEICHENSCHILD UND HERSTELLUNGSVERFAHREN
PLAQUE D'IMMATRICULATION ET PROCÉDÉ DE FABRICATION

(30) Priority: 01.04.2015 ES 201530450
(43) Date of publication of application: 05.10.2016
(73) Proprietor: INDUSTRIAS SAMAR'T, S.A., 17600 Figueres (Gerona) (ES)
(72) Inventor: SÁNCHEZ CASADEVALL, Enrique, 17600 Figueres (Gerona) (ES)
(74) Representative: Munoz Garcia, Antonio

(56) References cited:
- EP-A2- 0 253 532
- WO-A1-2005/025938
- ES-A1- 2 349 989
- GB-A- 2 127 750

## Description

### OBJECT OF THE INVENTION

The present invention relates to a license plate and to a process for manufacturing same.

Specifically, it involves a license plate made from different elements applied to a plastic plate, whose configuration and manufacturing process with stamped characters achieves an unforgeable acrylic finish. Specifically, the plate with stamped characters comprises: a lower sheet that is the color of the characters, an intermediate sheet of transparent plastic material suitable for being stamped, an easy-to-cut upper sheet with removable adhesive and a final sheet of reflective material, wherein both the lower sheet and the final sheet are painted.

### FIELD OF APPLICATION OF THE INVENTION

The field of application of the present invention is comprised within the industrial sector of license plate manufacturing, particularly in relation to the field of acrylic license plates.

### BACKGROUND OF THE INVENTION

The technical problem that the patent aims to resolve is that currently, acrylic license plates, that is, plates made from a flat plate of transparent plastic material, have the characters digitally printed on their rear face, instead of having them stamped, and the remaining elements of the plate are attached to them by painting or adhesive means, which gives rise to various drawbacks such as:
- Poor printing with character errors that need to be repaired by hand with a marker,
- Plates that are easily forgeable because as flat printing is involved, other trimmed characters can be placed on the printed characters using a plotter, which means that the content of the license plate can be completely changed and falsified,
- Difficulties that the operator can encounter in gluing the reflective sheet to the acrylic and its corresponding lamination.

As a reference to the closest prior art, patent document EP0253532A2 is known, relating to a "Method for producing an embossed identification plate having retroreflective sheeting of the surface thereof", which essentially comprises: first taking a piece of retroreflective sheeting with heat-activated adhesive onto the front surface of a plate blank, which retroreflective sheeting, where appropriate, is to be trimmed to fit within the reinforcing rim of the blank before tacking it to the blank; the plate blank is then embossed with a dual-die embossing press to emboss the alphanumerical characters or indicia; and then the retroreflective sheeting is cut with a make die in the form of the indicia. The plate blank can be made of a black pigmented plastic, e.g. ABS. The color of the plate blank is visible through the cut-out portions of the retroreflective sheeting.

### BRIEF DESCRIPTION OF THE INVENTION

Therefore, the license plate of the present invention consists of a license plate that is made from a plate of transparent plastic or an acrylic plate, with stamped characters, that is, forming a relief, being configured from the following elements:
- A lower sheet that is the color of the characters fixed to one of the faces of the intermediate sheet of transparent plastic material, across its entire surface area,
- An intermediate sheet of transparent plastic material which forms the acrylic plate and is suitable for being stamped,
- An easy-to-cut upper sheet with removable adhesive, of any color, which is incorporated onto the opposite face of the sheet of transparent plastic, also across its entire surface area, and
- A final sheet of reflective material which is incorporated onto the easy-to-cut sheet, across its entire surface area.

According to the present invention, the lower sheet and the final sheet which are attached to the intermediate acrylic sheet are painted, that is, in the case of the lower sheet they are configured as layers of paint the color of the characters, applied to one of the faces of the sheet of transparent plastic material across its entire surface area, and in the case of the final sheet they are configured as layers of reflective paint applied to the easy-to-cut sheet also across its entire surface area.

Therefore, the plate manufacturing process according to the present invention comprises the following steps:
A first step that involves:
- Painting, with a layer that is the color of the characters, on one of the faces of an intermediate sheet of transparent plastic material, determining a lower sheet across its entire surface area,
- Fixing the easy-to-cut upper sheet with removable adhesive onto the opposite face of the intermediate sheet of transparent plastic, across its entire surface area, and
- Painting with a layer of reflective material on the easy-to-cut upper sheet, determining a final sheet also across its entire surface area.

And a second step, in which the aforementioned assembly of elements incorporated onto the intermediate sheet of transparent plastic material is subjected to the character stamping process.

Finally, once the characters are stamped, the easy-to-cut upper sheet is removed and the final sheet painted with reflective paint being aligned with said characters, leaving the painted lower sheet that is the color of the characters visible.

### DESCRIPTION OF THE DRAWINGS

In order to complement the description of the invention being made and to help better understand the features, a set of drawings is attached to this specification as an integral part thereof in which the following is depicted in an illustrative and non-limiting manner:

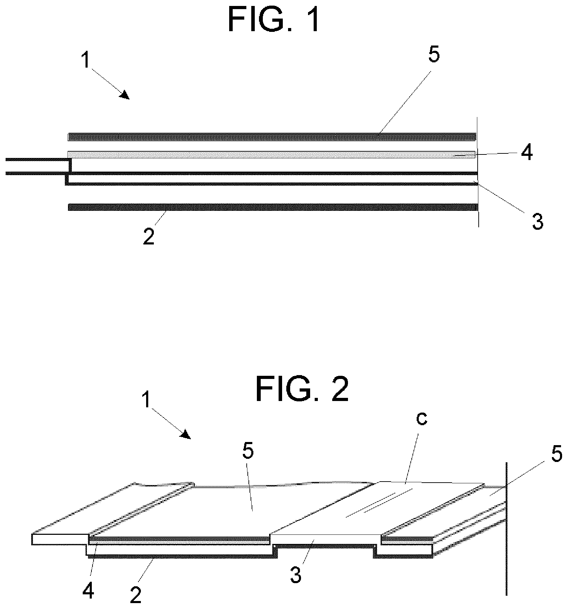

Figure 1 shows an exploded schematic view of the different elements that make up the plate object of the invention, the arrangement of each element being seen.
Figure 2 shows a perspective schematic section view of a part of the plate object of the invention once the characters have been stamped and the excess areas have been eliminated, the obtained result being seen.

### PREFERRED EMBODIMENT OF THE INVENTION

In light of the aforementioned drawings and according to the reference numbers used, it can be observed that the plate (1) at hand is a plate with stamped characters (c) that is configured from:
- A lower sheet (2) consisting of a painted layer that is the color of the characters incorporated onto one of the faces of the intermediate sheet (3) of transparent plastic material, across its entire surface area, except for those which incorporate the logotypes or anagrams for each country,
- An intermediate sheet (3) of transparent acrylic plastic material suitable for being stamped,
- An easy-to-cut upper sheet (4) with removable adhesive that is incorporated onto the opposite face of the intermediate sheet (3) of transparent plastic, also across its entire surface area, and
- A final sheet (5) consisting of a painted layer of material or reflective paint that is incorporated onto the easy-to-cut upper sheet (4).

## Claims

1. A license plate which, being a plate (1) made from different elements applied to an acrylic plastic plate with stamped characters (c), comprises, in the following order, a lower sheet (2) that is the color of the characters, an intermediate sheet (3) of transparent acrylic plastic material suitable for being stamped, an easy-to-cut upper sheet (4) with removable adhesive and a final sheet (5) of reflective material, wherein the lower sheet (2) consists of a painted layer that is the color of the characters incorporated onto the lower face of the intermediate sheet (3) of transparent plastic material, and the final sheet (5) consists of a layer of reflective paint incorporated onto the upper face of the easy-to-cut upper sheet (4), wherein the upper sheet (4) and the final sheet (5) are not present in the regions aligned with said characters (c).

2. A process of manufacturing a license plate like the plate described in claim 1, comprising the following steps:
A first step that involves:
- Painting, with a layer that is the color of the characters, on one of the faces of an intermediate sheet of transparent acrylic plastic material, across its entire surface area,
- Fixing the easy-to-cut upper sheet with removable adhesive onto the opposite face of the intermediate sheet of transparent acrylic plastic, across its entire surface area, and
- Painting with a layer of reflective material on the easy-to-cut upper sheet, also across its entire surface area;
A second step in which the aforementioned assembly of elements incorporated onto the intermediate sheet of transparent acrylic plastic material is subjected to the character stamping process;
And finally, once the characters are stamped, the easy-to-cut upper sheet is removed and the final sheet painted with reflective paint aligned with said characters are removed, leaving the painted lower sheet that is the color of the characters visible through the transparent intermediate sheet.

## Patentansprüche

1. Kennzeichenschild, wobei es ein Schild (1) ist, welches aus unterschiedlichen, auf einer Acryl-Kunststoffplatte mit den geprägten Zeichen (c) aufgetragenen Elementen durchgeführt ist und welches, in der folgenden Reihenfolge eine untere Folie (2) mit der Farbe der Zeichen, eine Zwischenfolie (3) aus durchsichtigem Acryl-Kunststoffmaterial und dazu geeignet, geprägt werden zu können, eine obere, leicht zu schneidende Folie (4) mit entfernbarem Kleber und eine Endfolie (5) aus reflektierendem Material umfasst, in welchem die untere Folie (2) aus einer Schicht besteht, welche mit der Farbe der Zeichen angemalt ist und auf der unteren Fläche der Zwischenfolie (3) aus durchsichtigem Kunststoffmaterial aufgenommen ist, und die Endfolie (5) aus einer Schicht mit reflektierender Farbe besteht, welche auf der oberen Fläche der oberen, leicht zu schneidenden Folie (4) aufgenommen ist, wobei die obere Folie (4) und die Endfolie (5) in den mit den genannten Zeichen (c) ausgerichteten Bereichen nicht vorhanden sind.

2. Herstellungsverfahren eines Kennzeichenschildes, wie das in Anspruch 1 beschrieben Schild, welches die folgenden Schritte umfasst:
einen ersten Schritt, welcher Folgendes betrachtet:
- das Anmalen mit einer Schicht mit der Farbe der Zeichen, auf einer der Flächen einer Zwischenfolie aus durchsichtigen Kunststoffmaterial, wobei dessen gesamte Oberfläche eingenommen wird,
- das Fixieren der oberen, leicht zu schneidenden Folie, mit entfernbarem Kleber, auf der gegenüberliegenden Fläche der Zwischenfolie aus durchsichtigem Acryl-Kunststoff, wobei dessen gesamte Oberfläche eingenommen wird,
- und das Anmalen mit einer Schicht aus reflektierendem Material auf der oberen, leicht zu schneidenden Folie, wobei auch dessen gesamte Oberfläche eingenommen wird;
einen zweiten Schritt, in welchem der zuvor erwähnte Satz aus Elementen, welche in der Zwischenfolie aus durchsichtigem Acryl-Kunststoffmaterial aufgenommen sind, dem Prägungsprozess der Zeichen unterzogen wird;
und, schließlich, nach der Prägung der Zeichen, wird die obere, leicht zu schneidende Folie entfernt und mit der Endschicht aus reflektierender Farbe in Übereinstimmung mit den genannten Zeichen, wobei, durch die durchsichtige Zwischenfolie, die untere Folie, welche mit der Farbe der Zeichen angemalt ist, zu sehen ist.

## Revendications

1. Plaque d'immatriculation qui, étant une plaque (1) réalisée à partir de différents éléments appliqués à une plaque en plastique acrylique avec les caractères (c) emboutis qui comprend, dans l'ordre suivant une feuille inférieure (2) de la couleur des caractères, une feuille intermédiaire (3) en matière plastique transparente acrylique et apte à pouvoir être emboutie, une feuille supérieure (4) facile à couper avec un adhésif amovible et une feuille finale (5) en matière réfléchissante, dans laquelle la feuille inférieure (2) consiste en une couche peinte de la couleur des caractères, incorporée sur la face inférieure de la feuille intermédiaire (3) de matière plastique transparente, et la feuille finale (5) consiste en une couche de peinture réfléchissante, incorporée sur la face supérieure de la feuille supérieure (4) facile à couper, dans laquelle la feuille supérieure (4) et la feuille finale (5) ne sont pas présentes dans les régions alignées avec lesdits caractères (c).

2. Procédé de fabrication d'une plaque d'immatriculation, comme la plaque décrite dans la revendication 1, comprenant les phases suivantes :
une première phase, qui comprend :
- la peinture avec une couche de la couleur des caractères sur une des faces d'une feuille intermédiaire de matière plastique transparente, en occupant toute sa surface,
- la fixation de la feuille supérieure facile à couper, avec un adhésif amovible, sur la face opposée de la feuille intermédiaire en plastique transparente acrylique, en occupant tout sa surface,
- et la peinture avec une couche de matière réfléchissante sur la feuille supérieure facile à couper en occupant également toute sa surface;
une seconde phase, dans laquelle ledit ensemble d'éléments incorporés à la feuille intermédiaire de matière plastique transparente acrylique est soumis au procédé d'emboutissage des caractères ;
et, finalement, après l'emboutissage des caractères, la feuille supérieure facile à couper est retirée et avec la couche finale de peinture réfléchissante alignée avec lesdits caractères, la feuille inférieure peinte de la couleur des caractères demeurant visible à travers la feuille intermédiaire transparente.
